# EUROPEAN PATENT APPLICATION

(11) **EP 1 939 395 A2**
(43) Date of publication of application: **02.07.2008**
(21) Application number: 07122496.8
(22) Date of filing: 06.12.2007
(51) Int. Cl.: F01D 5/02

(54) **Turbine engine shaft**

(30) Priority: 20.12.2006 US 643501
(71) Applicant: General Electric Company, Schenectady, NY 12345 (US)
(72) Inventor: Chou, Chen-yu Jack, Cincinnati, OH 45241 (US); Orlando, Robert Joseph, West Chester, OH 45069 (US); Moniz, Thomas Ory, Loveland, OH 45140 (US); Halter, Paul Herbert, Milford, OH 45150 (US)
(74) Representative: Bedford, Grant Richard

(57) **Abstract**

A shaft (100) for a turbine engine is provided. The shaft (100) includes a first end (102), an opposing second end (104), and a tubular portion (106) extending therebetween, a reinforcing layer (116) circumscribing a portion of the tubular portion, the reinforcing layer including a metallic matrix composite (MMC) material including reinforcing fibers (118), and a cladding (120) circumscribing a portion of the reinforcing layer and the tubular portion.

## Description

This invention relates generally to turbine engines, and more particularly to a shaft system assembly that may be utilized to reduce engine weight and improved vibration characteristic for a turbine engine.

At least one known gas turbine engine assembly includes a core engine wherein the overall core engine size is determined by the dynamic and load transfer capabilities of the inner shaft, i.e. a low-pressure turbine shaft. Known core engines include a shaft fabricated using monolithic metallic materials, such as titanium or steel, for example. As the fuel prices increase and the engine core size is reduced for future engine architectures, the size of known shafts is reduced and overall engine pressure is increased to save turbine engine weight and fuel consumption. At least one known reduced size shaft is capable of transmitting the required engine torque and power; however, the shaft design is limited by meeting engine system dynamic margin criteria when sized to the required shaft diameter for assembly and bearing life. Specifically, reduced diameter shafts made of monolithic metallic materials increase the engine system vibration and reduce the strength capability of the shaft.

In one aspect according to the present invention, a method for assembling a turbine engine assembly is provided. The turbine engine includes a core engine. The method includes coupling a first rotor spool within the engine assembly, wherein the first rotor spool includes a first fan assembly coupled upstream from the core engine, an intermediate-pressure turbine coupled downstream from the core engine, and a first shaft coupled between the first fan assembly and the intermediate-pressure turbine. The method further includes coupling a second rotor spool within the engine assembly, wherein the second rotor spool includes a second fan assembly coupled upstream from the first fan assembly, a low-pressure turbine coupled downstream from the intermediate-pressure turbine, and a second shaft coupled between the second fan assembly and the low-pressure turbine. The method also includes coupling a third rotor spool within the engine assembly, wherein the third rotor spool includes a compressor, a high-pressure turbine coupled upstream from the intermediate-pressure turbine, and a third shaft extending between the compressor and the high-pressure turbine. At least one of the first, second, and third shafts includes a first end, an opposing second end, and a tubular portion extending between the first and second ends. A reinforcing layer circumscribes a portion of the tubular portion wherein at least a portion of the reinforcing layer is a metallic matrix composite (MMC) material that includes reinforcing fibers.

In a further aspect, a shaft for a turbine engine is provided. The shaft includes a first end, an opposing second end, and a tubular portion extending therebetween. The shaft further includes a reinforcing layer circumscribing a portion of the tubular portion wherein the reinforcing layer includes a metallic matrix composite material including reinforcing fibers. The shaft further includes a cladding circumscribing a portion of the reinforcing layer and the tubular portion.

In a further aspect, a counter-rotating multi-spool turbine engine is provided. The engine includes a first rotor spool including a fan assembly, a low-pressure turbine, and a first shaft wherein the fan assembly is coupled upstream from the high-pressure compressor and the low-pressure turbine is coupled downstream from the high-pressure turbine. The engine further includes a second rotor spool including an intermediate-pressure compressor, an intermediate-pressure turbine, and a second shaft wherein the intermediate-pressure compressor is coupled between the high-pressure compressor and the fan assembly and the intermediate-pressure turbine is coupled between the high-pressure turbine and the low-pressure turbine. The first shaft extends between the fan assembly and the low-pressure turbine, and the second shaft extends between the intermediate-pressure compressor and the intermediate-pressure turbine. A portion at least one of the first and second shafts is fabricated using a metallic matrix composite material including reinforcing fibers embedded therein.

Various aspects and embodiments of the present invention will now be described in connection with the accompanying drawings, in which:
Figure 1 is a schematic view of an exemplary multi-spool shaft gas turbine engine assembly;
Figure 2 is a schematic illustration of an exemplary multi-spool gas turbine engine and a FLADE duct;
Figure 3 is a cross-sectional view of another exemplary gas turbine engine assembly and an exemplary power take-off system;
Figure 4 is a perspective view of an exemplary shaft that may be used with an exemplary gas turbine engine; and
Figure 5 is a sectional view of an exemplary shaft shown in Figure 4 taken perpendicular to the axis of elongation.

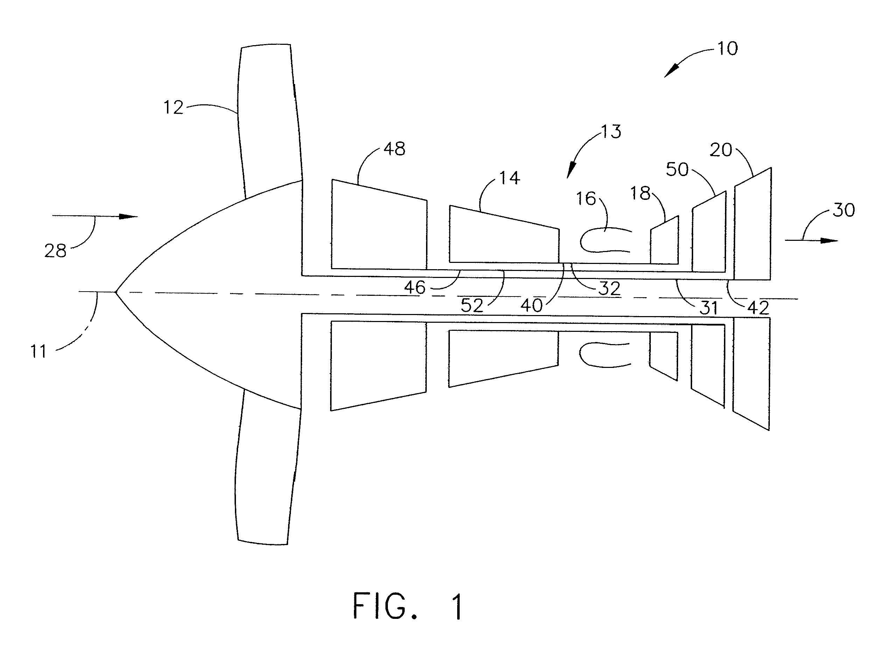

Figure 1 is a schematic view of an exemplary turbine engine assembly 10 having a longitudinal axis 11. Engine assembly 10 is used with at least one of, but not limited to, a supersonic, transonic, and subsonic and rotary aircrafts. In the exemplary embodiment, turbine engine assembly 10 is a multi-spool engine that includes a fan assembly 12 and a core gas turbine engine 13. Moreover, in the exemplary embodiment, gas turbine engine assembly 10 is a counter-rotating engine. In an alternative embodiment, engine assembly 10 is at least one of, but not limited to, a single spool gas turbine engine, a two-spool gas turbine engine, a multi-spool gas turbine engine, a variable cycle (VCE) gas turbine engine, an adaptive cycle (ACE) gas turbine engine, a turbine based combined cycle (TBCC) engine system, and a FLADE engine, as will be described in more detail below. In an alternative embodiment, a fan variable bypass injector (VABI) is positioned downstream from fan assembly 12 and upstream from core engine 13 within at least one of the VCE gas turbine engine, ACE gas turbine engine, and TBCC engine systems. A VABI provides variable bypass flow to core engine 13.

Core gas turbine engine 13 includes a high-pressure compressor 14, a combustor 16 coupled downstream from high-pressure compressor 14, and a high-pressure turbine 18 that is coupled to high-pressure compressor 14 via a first shaft 32. In the exemplary embodiment, gas turbine engine assembly 10 also includes a low-pressure turbine 20 that is coupled downstream from core gas turbine engine 13, and a second shaft 31 that is used to couple fan assembly 12 to low-pressure turbine 20. In the exemplary embodiment, second shaft 31 has a diameter of approximately 2.5 inches. In an alternative embodiment, second shaft 31 has a diameter larger than 2.5 inches. Gas turbine engine assembly 10 has an intake side 28 and an exhaust side 30. In the exemplary embodiment, gas turbine engine assembly 10 is a three-spool engine wherein the high-pressure compressor 14, high-pressure turbine 18 and shaft 32 form a first spool 40, and fan assembly 12, low-pressure turbine 20, and shaft 31 form a second spool 42.

Gas turbine engine assembly 10 also includes a third spool 46 that includes an intermediate-pressure compressor 48 that is coupled axially between fan assembly 12 and high-pressure compressor 14, and an intermediate-pressure turbine 50 that is coupled between high-pressure turbine 18 and low-pressure turbine 20. Third spool 46 also includes a third shaft 52 that couples intermediate-pressure compressor 48 to intermediate-pressure turbine 50.

In operation, a portion of the airflow discharged from fan assembly 12 is channeled through intermediate-pressure compressor 48. Compressed air discharged from intermediate-pressure compressor 48 is channeled through compressor 14 wherein the airflow is further compressed and channeled to combustor 16. Combustion gases from combustor 16 are utilized to drive turbines 18, 50 and 20. Gas turbine engine assembly 10 is operable at a range of operating conditions between design operating conditions and off-design operating conditions.

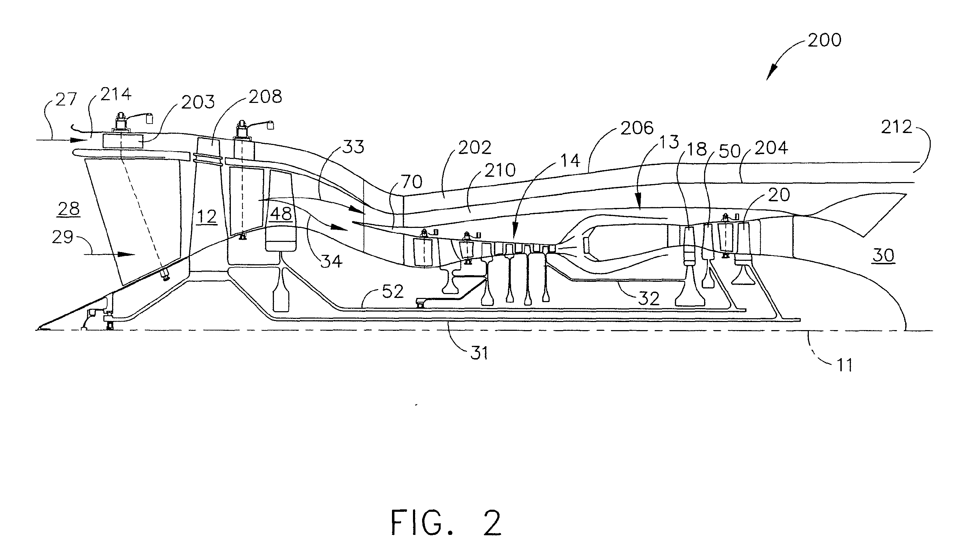

Figure 2 is a cross-sectional view of another exemplary gas turbine engine assembly 200 having a longitudinal axis 11. Engine 200 is substantially similar to engine 10, and as such, components of Figure 2 that are identical to components of Figure 1 are referenced in Figure 2 using the same reference numerals used in Figure 1. Engine 200 is a three-spool engine that includes a FLADE (a fan on blade) duct 202 extending through a gap defined between an outer casing 204 of engine 200 and a FLADE casing 206 that is radially outward of casing 204. Duct 202 includes an inlet 214, an inlet guide vane (IGV) 203 coupled downstream from duct inlet 214, and a plurality of FLADEs 208 coupled downstream from IGV 203 and radially outward from fan assembly 12. FLADEs 208 facilitate increasing the thrust and efficiency of engine 200. In the exemplary embodiment, IGV 203 is variably positionable to selectively control airflow through FLADE duct 202.

Engine 200 also includes a duct 210 that is coupled downstream from fan assembly 12. More specifically, duct 210 is radially inward of FLADE duct 202 and is radially outward of core engine 13. Engine 200 also includes a splitter 70 that is coupled downstream from fan assembly 12. More specifically, splitter 70 is coupled upstream from compressor 14.

During operation, a first portion 27 of airflow is channeled into duct 202 through duct inlet 214. The airflow 27 is channeled downstream past IGV 203 and through FLADEs 208 wherein the airflow 27 is compressed prior to being discharged through an outlet 212 of FLADE duct 202 to facilitate increasing an amount of thrust discharged from engine 200. A second portion 29 of airflow is channeled through intake side 28 and is compressed by fan assembly 12. Airflow 29 discharged from fan assembly 12 is channeled downstream past splitter 70 and is separated into a plurality of flowpaths 33 and 34.

In operation, the first portion 33 of airflow is channeled downstream through duct 210 prior to being discharged from engine 200. Moreover, during operation, the second portion 34 of airflow is channeled through intermediate-pressure compressor 48.

Compressed air discharged from intermediate-pressure compressor 48 is channeled through compressor 14 wherein the further compressed airflow is discharged towards combustor 16. Combustion gases from combustor 16 are utilized to drive turbines 18, 50 and 20. Gas turbine engine assembly 200 is operable at a range of operating conditions between design operating conditions and off-design operating conditions.

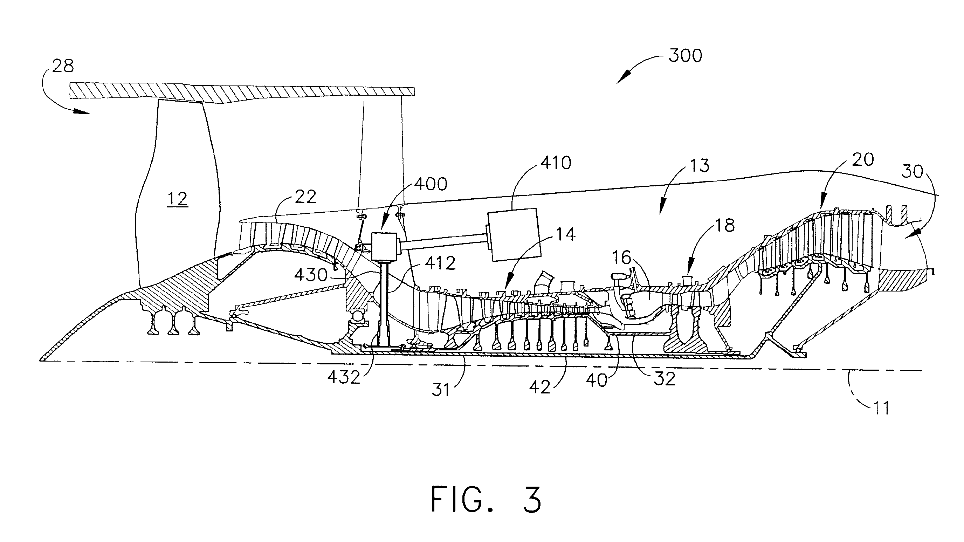

Figure 3 is a cross-sectional view of a gas turbine engine assembly 300 having a longitudinal axis 11. Gas turbine engine assembly 300 includes a fan assembly 12 and a core gas turbine engine 13. Core gas turbine engine 13 includes a high-pressure compressor 14, a combustor 16 coupled downstream from high-pressure compressor 14, and a high-pressure turbine 18 that is coupled to high-pressure compressor 14 via a first shaft 32. In the exemplary embodiment, gas turbine engine assembly 300 also includes a low-pressure turbine 20 coupled downstream from core gas turbine engine 13, a multi-stage booster compressor 22 that is coupled to fan assembly 12, and a shaft 31 that couples fan assembly 12 and booster compressor 22 to low-pressure turbine 20. Gas turbine engine assembly 300 has an intake side 28 and an exhaust side 30. In the exemplary embodiment, gas turbine engine assembly 300 is a two-spool engine wherein the high-pressure compressor 14, high-pressure turbine 18 and shaft 32 form a first spool 40, and fan assembly 12, booster 22, low-pressure turbine 20 and shaft 31 form a second spool 42.

In operation, a first portion of the airflow discharged from fan assembly 12 is channeled through booster 22. Compressed air discharged from booster 22 is channeled through compressor 14 wherein the airflow is further compressed and delivered to combustor 16. Combustion gases from combustor 16 are utilized to drive turbines 18 and 20, and turbine 20 is utilized to drive fan assembly 12 and booster 22 by way of shaft 31. Gas turbine engine assembly 300 is operable at a range of operating conditions between design operating conditions and off-design operating conditions.

Gas turbine engine assembly 300 also includes an exemplary power take-off system 400. Power take-off system 400 includes a starter (not shown) that includes a motor/generator 410. The term "starter", as used herein, is defined as a device that in one mode is operable as a motor to start the first spool 40, and is also operable in a second mode as a generator that may be driven by either first spool 40 and/or second spool 42 to generate electrical power during predetermined engine operations.

The starter includes a motor/generator 410 and a shaft 412 that couples the starter to first spool 40 and/or to second spool 42. More specifically, shaft 412 includes a first end 430 that is coupled to and thus driven by motor/generator 410. Shaft 412 also includes a second end 432 and a pinion (not shown) that is coupled to second end 432. Moreover, power take-off system 400 also includes a first ring gear (not shown) that is coupled or splined to rotor shaft 31, and a second ring gear (not shown) that is coupled to an extension shaft 412. In the exemplary embodiment, shaft 412 has a diameter of approximately 1 inch. In an alternative embodiment, shaft 412 has a diameter that is larger than 1 inch.

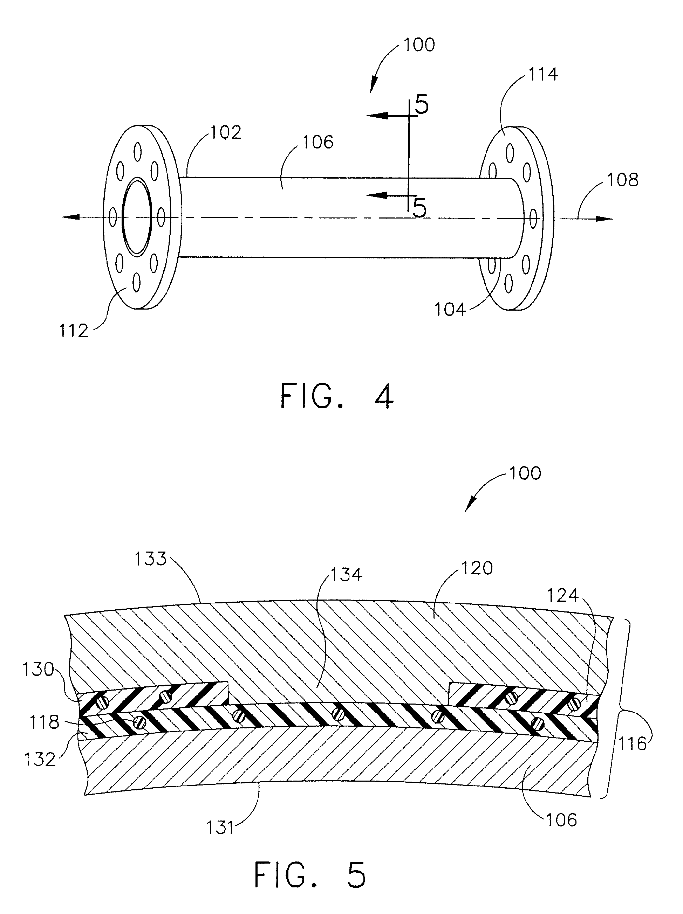

Figure 4 is a perspective view of a shaft 100 that may be used with any of gas turbine engines 10, 200, and/or 300. In the exemplary embodiment, shaft 100 is at least one of, but not limited to, first shaft 32 (shown in Figure 2), second shaft 31 (shown in Figure 2), third shaft 52 (shown in Figure 2), and/or shaft 412 (shown in Figure 3). In an alternative embodiment, shaft 100 may be any shaft used within a gas turbine engine including at least one spool. In a further alternative embodiment, shaft 100 may be, for example, a power take-off (PTO) shaft, a shaft in an auxiliary power unit (APU), a shaft in a starter, or a shaft in a power generator. In a further alternative embodiment, shaft 100 is a single shaft auxiliary power unit (APU) and/or an engine starter shaft fabricated using a metallic matrix composite material including reinforcing fibers embedded therein. In the further alternative embodiment, as the engine by-pass ratio is increased, the single shaft power take off (PTO) shaft is designed to be longer and thinner than other known shafts, and the metallic matrix composite material with the reinforcing fibers reduces vibration of the shaft.

In the exemplary embodiment, at least a portion of shaft 100 is fabricated from a metallic matrix composite material (MMC) including reinforced fibers embedded therein, as will be described in more detail below. In the exemplary embodiment, the metallic matrix composite material is at least one of, but not limited to, titanium, nickel, steel, aluminum, or other materials. The metallic matrix composite material must be capable of providing the required strength and be able to transfer torque to the engine assembly.

Each shaft 100 includes a first end 102, an opposing second end 104, and a tubular potion 106 extending therebetween. Tubular portion 106 is an elongated hollow tubular shell that has a centerline axis 108. In the exemplary embodiment, tubular portion 106 is fabricated from a titanium-base alloy. As used herein, the term "titanium-base alloy" is used to describe an alloy having more titanium material present than any other element. In the exemplary embodiment, each shaft 100 includes a first endbell 112 coupled to first end 102, and a second endbell 114 coupled to second end 104. In the exemplary embodiment, endbells 112 and 114 are fabricated from any material that enables endbells 112 and 114 to function as described herein, such as, but not limited to, titanium, steel, and/or nickel. In the exemplary embodiment, endbells 112 and 114 are formed integrally with first and second ends 102 and 104, for example, via explosive welding or brazing. In an alternative embodiment, endbells 112 and 114 are joints, such as, but not limited to, coupled joints, splined joints, flanged joints, bolted joints, and/or adhesive joints formed integrally with first and second ends 102 and 104.

Figure 5 is a cross-sectional view of shaft 100 taken perpendicular to the centerline axis 108 along line 5-5. In the exemplary embodiment, shaft 100 includes tubular portion 106, at least one reinforcing layer 116 extending over at least a portion of tubular portion 106, and a hardened cladding, i.e. casing, 120 coupled extending over at least a portion of reinforcing layer 116. Specifically, tubular portion 106 is fabricated from a titanium-base alloy, and cladding 120 is fabricated from a titanium-base alloy. More specifically, in the exemplary embodiment, tubular portion 106 and cladding 120 are each preferably fabricated with the same nominal composition. Alternatively, tubular portion 106 and cladding 120 are fabricated of different nominal compositions.

Reinforcing layer 116 includes a plurality of reinforcing fibers 118 that are oriented substantially parallel to centerline axis 108. Reinforcing fibers 118 are fabricated from materials, such as boron, graphite (carbon), alumina and silicon carbide, which carry high tension, compression, and/or torsional loads during operation of engine 10, 200, and/or 300. Reinforcing fibers 118 are arranged in one or more plies, i.e. layers, with each ply being fabricated at approximately the same constant diameter. In the exemplary embodiment, reinforcing layer 116 includes reinforcing fibers 118. Moreover, in the exemplary embodiment, between one to ten plies of reinforcing fibers 118 are embedded and oriented within a matrix 124, as will be described in more detail below. In the exemplary embodiment, matrix 124 is a metallic matrix composite (MMC) material.

The metallic matrix composite material is a composite material that includes at least two constituents, one of which is a metallic material. The remaining constituents may include a different metallic material, or may be another material, such as a ceramic, organic, or other nonmetallic compound. In the exemplary embodiment, the metal constituent of the MMC material is a matrix titanium-base alloy. In an alternative embodiment, the metal constituent of the MMC material may include, but is not limited to including, metallic materials, such as aluminum, magnesium, titanium, nickel, cobalt, and iron. In one embodiment, the MMC fiber material is commercially available from Textron, Inc., Lowell, Massachusetts; Atlantic Research Co., Wilmington, Massachusetts; and FMW Composite Systems, Inc. Bridgeport, West Virginia.

MMC materials generally have higher strength-to-density ratios, higher stiffness-to-density (E/rho) ratios, exhibit enhanced fatigue resistance, have better elevated temperature properties, have lower coefficients of thermal expansion, exhibit enhanced wear resistance, and improved dynamic damping as compared to monolithic metals. Moreover, MMCs materials have a modulus of elasticity of about 18-32x10⁶ psi, for example, which enables a shaft, such as shaft 100, fabricated from such materials to have a modulus of elasticity that is generally at least 25% better than that of a conventional monolithic drive shaft made from titanium. As such, shaft 100 may be fabricated with a lighter weight and with thinner sidewalls than shafts fabricated using other known materials. Furthermore, the MMC materials facilitate superior damping of shaft 100 and therefore facilitate minimizing noise produced by shaft 100 during operation of the engine.

In the exemplary embodiment, reinforcing fibers 118 are silicon carbide continuous fibers embedded within matrix 124. In an alternative embodiment, reinforcing fibers 118 are at least one of, but not limited to, alumina, tungsten or other suitable materials. Moreover, in an alternative embodiment, reinforcing fibers 118 are discontinuous. Specifically, discontinuous reinforcing fibers 118 are nano structures, whiskers, short fibers, or particles. Reinforcing fibers 118 are embedded into matrix 124 in a certain direction which results in an anisotropic structure wherein the alignment of reinforcing fibers 118 affects the strength of shaft 100.

Reinforcing fibers 118 are coupled within matrix 124 and fibers 118 are not exposed on either the inner surface 131 of tubular portion 106, or on the outer surface 133 of cladding 120. Specifically, reinforcing fibers 118 are embedded into matrix 124 by at least one of external doping and/or solid free forming techniques such as laser sintering, plasma vapor deposition, and fuse deposition without reinforcing layers.

In the exemplary embodiment, tubular portion 106, matrix 124, reinforcing fibers 118, and cladding 120 are all bonded together to form an integral piece. Specifically, in the exemplary embodiment, tubular portion 106, matrix 124, reinforcing fibers 118, and cladding 120 are produced using at least one of, but not limited to, Hot Isostatic Pressing (HIP), Plasma vapor deposition (PVD), Plasma enhanced chemical vapor deposition (PECVD), laser sintering, or diffusion bonding reinforcing fibers 118 to matrix 124.

During assembly, in the exemplary embodiment, reinforcing fibers 118 within matrix 124 are oriented in as layers 130 and 132. Each layer 130 and 132 includes at least one ply of fibers formed within a layer of matrix 124. Specifically, in the exemplary embodiment, each layer 130 is staggered at a preset angle with respect to each adjacent layer 132. In an alternative embodiment, each layer 130 is helically wrapped with respect to adjacent layer 132. In the exemplary embodiment, layers 130 and 132 have limited circumferential regions 134 in which no reinforcing fibers 118 are arranged. Reinforcing fibers 118 may change the physical properties of matrix 124 by improving the wear resistance, friction coefficient, material damping, and/or thermal conductivity of shaft 100.

In an alternative embodiment, the reinforcing continuous fibers 118 are already embedded within matrix 124 in the form of plies of material may be purchased commercially from companies such as Textron, Inc., Lowell, Massachusetts; and/or FMW Composite Systems, Bridgeport, WV.

In an alternative embodiment, the material properties of the reinforcing discontinuous fibers 118 are enhanced by heat treating at least portion of the shaft to change the microstructure of the composite materials which results in increased damping of the MMC material.

Various matrix materials, reinforcements, and layer orientations make it possible to tailor the properties of shaft 100 to meet the needs of a specific design. For example, within broad limits, it is possible to specify strength and stiffness in one direction, and a coefficient of expansion in another. Moreover, the reinforced MMC material, as described herein reduces system vibration by approximately 20% to 100% due to enhanced resultant damping capability of the composite material over other known engines with known monolithic shafts.

Specifically, when shaft 100 is utilized in a counter rotation multi-spool gas turbine engine, at least one of the engine shafts has a rotational direction opposite to a second shaft. The counter rotation of engine shafts improves the low pressure turbine efficiency due to reduced airfoil turning in the direction of air flow and reduces shock interaction loss. However, the improved engine performance is penalized by the reduction of engine shaft dynamic margin and overall all engine clearance margin especially for the low pressure turbine when the monolithic metal shaft material is used. Fabricating at least a portion of at least one shaft of the multi-spool counter rotating shaft from MMC including reinforcing fibers dispersed therein improves the shaft dynamic damping characteristic, i.e. E/rho, by 20% to 90% over known monolithic shaft material, i.e. GE1014 or Marage250. The improved resultant damping of composite material significantly reduces the engine clearance margin to maximize the performance benefit of the counter rotation.

The method described herein includes coupling a first rotor spool within the engine assembly, wherein the first rotor spool includes a first fan assembly coupled upstream from the core engine, an intermediate-pressure turbine coupled downstream from the core engine, and a first shaft coupled between the first fan assembly and the intermediate-pressure turbine. The method further includes coupling a second rotor spool within the engine assembly, wherein the second rotor spool includes a second fan assembly coupled upstream from the first fan assembly, a low-pressure turbine coupled downstream from the intermediate-pressure turbine, and a second shaft coupled between the second fan assembly and the low-pressure turbine. The method also includes coupling a third rotor spool within the engine assembly, wherein the third rotor spool includes a compressor assembly, a high-pressure turbine coupled upstream from the intermediate-pressure turbine, and a third shaft extending between the compressor assembly and the high-pressure turbine. At least one of the first, second, and third shafts include a first end, an opposing second end, and a tubular portion extending between the first and second ends. A reinforcing layer circumscribes a portion of the tubular portion wherein at least a portion of the reinforcing layer is a metallic matrix composite (MMC) material that includes reinforcing fibers.

Described herein is an exemplary shaft fabricated from a reinforced MMC material for use with a gas turbine engine. Specifically, in the exemplary embodiment, the shaft is fabricated for use with a multi-spool engine. As the number of shafts in an engine increases, the inner shaft becomes longer and thinner than other known shafts. A long and thin shaft fabricated from reinforced MMC material is stronger and stiffer than shafts fabricated with monolithic materials. Moreover, reinforced MMC shafts improve material damping by at least 20% to 100% and strength capability by 20% to 90% over monolithic matrix materials. Moreover, reinforced MMC shafts, as described herein, can be tailored to engine design needs, such as reducing the overall engine diameter.

An exemplary embodiment of a reinforced MMC shaft for a turbofan engine assembly is described above in detail. The shafts illustrated are not limited to the specific embodiments described herein, but rather, components of each shaft may be utilized independently and separately from other components described herein.

While the invention has been described in terms of various specific embodiments, those skilled in the art will recognize that the invention can be practiced with modification within the spirit and scope of the claims.

## Claims

1. A shaft (100) for a turbine engine, said shaft comprising:
a first end (102), an opposing second end (104), and a tubular portion (106) extending therebetween;
a reinforcing layer (116) circumscribing a portion of said tubular portion, said reinforcing layer comprising a metallic matrix composite (MMC) material (124) including reinforcing fibers (118); and
a cladding (120) circumscribing a portion of said reinforcing layer and said tubular portion.

2. A shaft (100) in accordance with Claim 1 wherein said shaft is coupled within at least one of a single-spool gas turbine engine (10), a two-spool gas turbine engine, a multi-spool gas turbine engine, a FLADE engine, a variable cycle (VCE) gas turbine engine, an adaptive cycle (ACE) gas turbine engine, and a turbine-based combined cycle (TBCC) engine.

3. A shaft (100) in accordance with any preceding Claim wherein said shaft is a power take-off shaft (412).

4. A shaft (100) in accordance with any preceding Claim wherein said tubular portion (106) is fabricated with a titanium-based alloy and said cladding (120) is fabricated with a titanium-based alloy.

5. A shaft (100) in accordance with any preceding Claim wherein said shaft has an axis of elongation wherein said reinforcing fibers (118) extend substantially parallel to the axis of elongation.

6. A shaft (100) in accordance with any preceding Claim wherein said reinforcing fibers (118) are arranged in at least one ply, said reinforcing fibers comprise at least one of nano-sized Boron and Boride fibers dispersed within said MMC material.

7. A shaft (100) in accordance with Claim 6 wherein at least one of said Boron and Boride fibers are dispersed within said MMC using at least one of external doping and solid free forming techniques.

8. A shaft (100) in accordance with any preceding Claim wherein said MMC material comprises at least one of titanium, nickel, steel, and aluminum.

9. A counter-rotating, multi-spool turbine engine comprising:
a first rotor spool (40) comprising a fan assembly (12), a low-pressure turbine (20), and a first shaft (32), said fan assembly is coupled upstream from said high-pressure compressor (14), said low-pressure turbine is coupled downstream from said high-pressure turbine (18); and
a second rotor spool (42) comprising an intermediate-pressure compressor (48), an intermediate-pressure turbine (50), and a second shaft (31), said intermediate-pressure compressor is coupled between said high-pressure compressor and said fan assembly, said intermediate-pressure turbine is coupled between said high-pressure turbine and said low-pressure turbine, said first shaft extending between said fan assembly and said low-pressure turbine, said second shaft extending between said intermediate-pressure compressor and said intermediate-pressure turbine, a portion of at least one of said first and second shafts is fabricated using a metallic matrix composite (MMC) material including reinforcing fibers (118) embedded therein.

10. A gas turbine engine (10) in accordance with Claim 9 further comprising a third rotor spool (46) comprising a high-pressure compressor (14), a high-pressure turbine (18) coupled downstream from said high-pressure compressor, and a third shaft (52) extending therebetween.
